Europäisches Patentamt

European Patent Office

Office européen des brevets

(19)

(11) Publication number: **0 373 873**
**A2**

## EUROPEAN PATENT APPLICATION

(12)

(21) Application number: **89312954.4**

(22) Date of filing: **12.12.89**

(51) Int. Cl.⁵: **C08G 69/48, C08G 69/28,**
**B01F 15/04, B29B 7/72**

(30) Priority: **12.12.88 US 283532**
**20.10.89 US 425388**

(43) Date of publication of application:
**20.06.90 Bulletin 90/25**

(84) Designated Contracting States:
**BE DE FR GB IT NL**

(71) Applicant: **DU PONT CANADA INC.**
**Box 2200 Streetsville**
**Mississauga Ontario L5M 2H3(CA)**

(72) Inventor: **Parlee, Brian Rutherford**
**850 Nordic Avenue**
**Kingston Ontario K7M 4T1(CA)**

(74) Representative: **Harrison, David Christopher**
**et al**
**MEWBURN ELLIS 2 Cursitor Street**
**London EC4A 1BQ(GB)**

(54) **Process and apparatus for modifying polyamide dyeability or amine end content.**

(57) A process for controlling the amine end content or dyeability of polyamide articles during the manufacture thereof is disclosed. The articles are manufactured by forming them from a stream of molten polyamide. Firstly, either a dyeability measurement or an amine end measurement of the article is taken at periodic intervals. The dyeability measurement or amine end measurement is then compared to a set point representing the desired dyeability or number of polyamine ends of the articles. Diamine is then injected into the stream of molten polyamide in response to any deviation of the dyeability measurement or amine end measurement from the set point. The polyamide and the diamine are then combined to provide a polyamide having a modified amine end content.

EP 0 373 873 A2

# PROCESS AND APPARATUS FOR MODIFYING POLYAMIDE DYEABILITY OR AMINE END CONTENT

This invention relates to a process and apparatus for modifying polyamide dyeability.

Conventionally, polyamide products are formed either in a batch process or in a semi-continuous process. In batch processes, polymer in the form of flakes or particles, is melted in a grid type melter with a ram or a screw or is melted in an extruder and is then extruded for formation into products such as fibres, sheet, film or the like. If the resultant product exhibits properties that deviate from the desired properties, the composition of the next batch of polymer being produced will be adjusted. In the case of polyamide being processed for a dye critical end use, if the dyeability of the product deviates from a desired dyeability, the relative amount of diamine or adipic acid in the next batch of polymer will be adjusted. The disadvantage with this approach is that there is considerable lag time (generally several hours or days) between the determination of dyeability and any subsequent adjustment of the polyamide composition. Accurate control of polyamide dyeability therefore is not achievable by this approach.

Dyeability is the measure of how dark the polymer will be dyed by a certain amount of dye. For polyamides to be dyed with acid dyes, the dyeability is related to the concentration of polymer chain-end amine chemical groups (denoted as "amine ends" and reported in units of chemical gram equivalents for million grams of polymer). Light dye polyamide products typically have 13 ends available for dyeing, regular dye polyamide products typically have 37 ends available for dyeing and deep dye products typically have 76 ends available for dyeing. The dyeability of a polyamide is measured in dye units. Factors are chosen for each dye type to allow a common base value of 180 dye units.

An apparatus and process for controlling the dyeability of polyamide articles have now been found.

Accordingly, in one aspect the invention provides a process for controlling the amine end content or dyeability of polyamide articles during the manufacture thereof, said articles being manufactured by forming the articles from a stream of molten polyamide, said process comprising the steps of:

taking either a dyeability measurement or an amine end measurement of said articles at periodic intervals;

comparing the dyeability measurement or amine end measurement to a set point representing the desired dyeability or number of polyamine ends of said articles;

injecting diamine into said stream of molten polyamide in response to any deviation of the dyeability measurement or amine end measurement from said set point; and

mixing said polyamide and said diamine to provide a polyamide having a modified amine end content.

In one embodiment of the process of the invention the diamine is injected at an injection rate determined by the equation:

injection rate (ml/min) = current injection rate (ml/min) + (correction factor) x (dyeability change or amine end change (dye units)) x (polymer throughput (kg/hr));     (1)

wherein the correction factor is determined empirically.

In another one of its aspects, the invention provides an apparatus for controlling the dyeability or amine end content of polyamide by adding a diamine to the polyamide, said apparatus comprising:

a melt chamber;

a metering pump for pumping said diamine from a storage vessel to said melt chamber;

a flash region into which said diamine is pumped by said pump, said region being maintained at a temperature and pressure suitable for vapourizing said diamine;

a check valve located between said pump and said region; and

an injection valve for injecting said diamine into said melt chamber.

With the present invention, the number of amine ends of the polyamide may be adjusted just before the article is formed instead of making adjustments to the polymer formula during initial polymerization, which allows for faster response to deviations in polyamide dyeability or amine end content.

Preferred polyamides to be used in the process of the present invention are nylon 12,12 and nylon 6,6.

The diamines that may be used in the present invention preferably are in fluid form at the temperature of the polymer melt into which they are to be extruded and most preferably have a melting point of less than 270°C. Most preferred diamines are hexamethylene diamine and dodecamethylene diamine. Hexamethylene is preferably used with nylon 6,6 and dodecamethylene is preferably used with nylon 12,12.

The amine end content is measurable using a suitable analytical technique, such as perchloric acid titration.

In a particularly preferred embodiment, the polyamide resin is manufactured with from 1 to 5 and most preferably from 1 to 3 fewer amine ends than in conventional manufacture. The dyeability of the resultant article is then measured after it has been manufactured and if it deviates substantially from a desired dyeability, diamine is injected into the molten polymer to adjust the dyeability of the polyamide. The dyeability may be adjusted by from 0 to 10 ends if the polymer is prepared with 5 fewer ends and may be adjusted by from 0 to 6 ends if the polymer is prepared with 3 fewer ends.

To achieve an amine end adjustment in the range of 0 to 10 ends, the concentration of an aqueous solution of diamine to be used in the present invention should be at least 70 wt% and most preferably at least 80 wt%. It is not usually necessary to use diamine having a concentration of greater than about 90 wt%, and such a concentration is usually not desirable to use because it is costly to store. The accuracy of metering of the diamine does not need to be high to achieve this amine end adjustment, but should be in the range of about plus or minus 1 to 5 wt%, and most preferably about plus or minus 2.5 wt% to 5 wt%. An accuracy of greater than this is generally not necessary because of the cost involved and the complexity of the equipment required. The polyamide articles may be sheets, fibres, films, containers etc. The articles are most preferably fibres.

The injection rate of diamine to be injected to obtain a desired change in amine end content or dyeability change may be calculated using the following equation:

Injection rate (ml/min) = current injection rate (ml/min) + (dyeability change or amine end change (dye units)) x (polymer throughput (kg/hr)) x (correction factor)        (1)

The correction factor is determined empirically and may vary from sytem to system.

The dyeability change or amine end change may be determined statistically, for example by the "Cusum" method as described in Journal of Quality Technology, Volume 8(1), January 1976, pages 1-12: "The Design and Use of V-Mask Control Systems" - James M. Lucas.

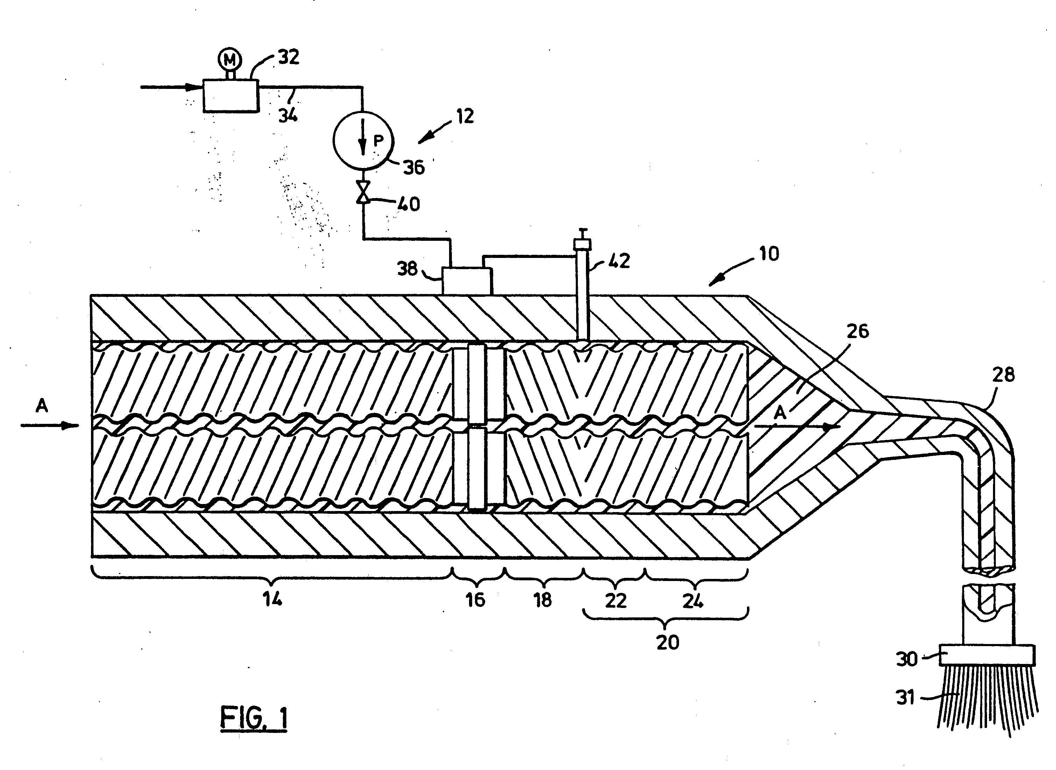

The invention will be further described, by way of illustration only, with reference to Figure 1 which is a diagrammatic representation of an apparatus for injecting diamine into molten polyamide in a fibre manufacturing process.

The apparatus comprises a melt chamber 10 for melting and pumping polyamide and an injection system 12 for injecting diamine into the polyamide.

The melt chamber 10 is a commercially available double screw extruder. It comprises a polymer heating and conveying zone 14 followed by a polymer kneading and melting zone 16. Reverse pitch elements 18 are located after the kneading zone and a polymer pumping zone 20 is located after these elements. The polymer pumping zone has an upstream low pressure region 22 and a downstream high pressure region 24. The outlet 26 of the melt chamber is connected to a transfer line 28 which leads to a spinning pack 30.

The injection system 12 comprises a flow meter 32 connected by a heated line 34 to a positive displacement pump 36, which is in turn connected to a flash chamber 38 mounted on the melt chamber 10. A check valve 40 is located in the line 34 between the pump 36 and the flash chamber 38. Following the flash chamber 38 is a heated injection valve 42 which extends into the upstream low pressure zone 22 of the polymer pumping zone 20.

In operation, polymer passes through the melt chamber 10 in the direction of the arrow labelled A. The polymer passes first through the polymer heating and conveying zone 14 and then through the polymer kneading and melting zone 16. Reverse pitch elements 18 cause polymer to back up and completely fill the kneading zone 16. The low pressure region 22 is therefore completely sealed from the conveying zone 14, which may be vented.

Diamine is passed through the line 34 and its flow rate is measured by the flow meter 32. The diamine is then pumped by the pump 36 to the flash chamber 38. The check valve 40 inhibits any pressure pulses from travelling from the flash chamber 38 to the pump 36. Such pressure pulses may otherwise have an adverse effect on the accuracy of the flow meter measurements and on the efficiency of the pump 36. The vapourized diamine from the flash chamber 38 passes to the injector 42 and is injected into the low pressure region 22 of the pumping zone 20.

As the vapour is injected into the low pressure region 22, it is intimately contacted and mixed with the polyamide as it travels along the pumping zone 20 and transferline 28. During this process, the diamine diffuses into the polymer. As it is mixed with the polyamide, the diamine reacts with the polyamide to change its dyeability. The polyamide travels along the transfer line 28 to the spinning pack 30 and is extruded in the form of filaments 31. The dyeability of the resultant fibre is measured and the rate of injection of additive is modified if the measured dyeability deviates from a desired dyeability.

Alternatively, the number of amine ends could be measured and diamine added to adjust the number of amine ends. If dyeability is still not at the desired level, other factors, such as the yarn quench rate may be the cause of any dyeability deviations. These other factors may then be examined and modified if necessary.

The injection of aqueous amine into the process may cause depolymerization and therefore viscosity may drop due to the increased water content of the polymer. This may be offset by adjusting other process parameters such as the rate of process dehumidification.

Modifications may be made to the apparatus. The extruder could be any suitable commercial extruder which may have a different number of screws or low pressure zones. Alternatively, a commercial grid melter with a screw or piston may be used. The amine may be injected into a higher pressure region of the extruder or into the transfer line between the extruder and the region where the article is formed. In this case a higher pressure pump would be required. Moreover, the flash chamber may be replaced by a pipe having a wider diameter than the line 34. This pipe could be heated to the temperature of the extruder by an external heater.

The invention will be further described with reference to the following example:

## EXAMPLE

Regular dye level Nylon 6,6 fibre was manufactured by the process described with respect to Figure 1. During the manufacturing process, diamine was injected into the polymer at a rate of 4.8 ml/min. The dye level of the fibre produced was routinely measured about every six hours. The desired dye level was 180 dye units. By known statistical methods, it was determined that the process was running below the desired dye level. The correction factor for this process was determined to be 0.00018 by the method described below. The polymer throughput rate was 510 kg/hr and the correction required was determined statistically to be 11 dye units. The increase in diamine injection rate required to adjust amine end content was determined according to Equation (1) to be about 1.0 ml/min. The injection rate was therefore raised to 5.8 ml/min and after about 3 hours, dye level rose to 178 dye units.

## CORRECTION FACTOR

The correction factors for Equation (1) were determined empirically for this process by varying diamine injection rates and measuring the change in dye units of the fibre. The results are given in Table 1.

TABLE 1

| DYE TYPE | CORRECTION FACTOR |
|---|---|
| Light Dye | 0.00010 |
| Regular Dye | 0.00018 |
| Deep Dye | 0.00031 |

## Claims

1. A process for controlling the amine end content or dyeability of polyamide articles during the manufacture thereof, said articles being manufactured by forming the articles from a stream of molten polyamide, said process comprising the steps of:
taking either a dyeability measurement or an amine end measurement of said article at periodic intervals;
comparing the dyeability measurement or amine end measurement to a set point representing the desired dyeability or number of polyamine ends of said articles;
injecting diamine into said stream of molten polyamide in response to any deviation of the dyeability measurement or amine end measurement from said set point; and
mixing said polyamide and said diamine to provide a polyamide having a modified amine end content.

2. The process of claim 1 wherein said diamine is injected into process equipment containing said stream of molten polyamide said equipment being selected from a grid melter, an extruder or a transfer line.

3. The process of claim 1 or claim 2 wherein said diamine is a fluid at the polymer melt temperature.

4. The process of any one of claims 1 to 3 wherein said diamine is hexamethylene diamine or dodecamethylene diamine.

5. An apparatus for controlling the dyeability or amine end content of polyamide by adding a diamine to the polyamide, said apparatus comprising:

a melt chamber (10);

a metering pump (36) for pumping said diamine from a storage vessel to said melt chamber (10);

a flash region (38) into which said diamine is pumped by said pump (36), said region (38) being maintained at a temperature and pressure suitable for vapourizing said diamine;

a check valve (40) located between said pump (36) and said region (38); and

an injection valve (42) for injecting said diamine into said melt chamber (10).

6. The apparatus of claim 5 further comprising a flow meter (32) located upstream from said pump (36).

7. The process of any one of claims 1 to 4 wherein the diamine is injected at an injection rate determined by the equation:

injection rate (ml/min) = current injection rate (ml/min) + (correction factor) x (dyeability change or amine end change (dye units)) x (polymer throughput (kg/hr));     (1)

wherein the correction factor is determined empirically.

FIG. 1